# EUROPEAN PATENT APPLICATION

(11) **EP 0 681 871 A2**
(43) Date of publication of application: **15.11.1995**
(21) Application number: 95303169.7
(22) Date of filing: 09.05.1995
(51) Int. Cl.: B05B 15/04, B05B 15/12

(54) **Cyclone recovery system**

(30) Priority: 11.05.1994 AU PM5556/94
(71) Applicant: NORDSON CORPORATION, Westlake, Ohio 44145-1119 (US)
(72) Inventor: Maves, Richard N, North Ringwood 3134 (AU)
(74) Representative: Findlay, Alice Rosemary

(57) **Abstract**

A cyclone recovery system (10) for oversprayed particulate coating materials comprises a cyclone barrel (11) having an inlet opening and an exit passage (14) through which particulate matter may pass for collection (13). A turning vane assembly (15) is situated across the inlet opening. An outlet pipe (12) extends through an aperture in the turning vane assembly (15) and into the cyclone barrel (16). At least part of the turning vane assembly (15) and/or the outlet pipe (12) are moveable from their operative positions for facilitating- cleaning of at least part of the cyclone recovery system (10).

## Description

The present invention relates to a cyclone recovery system particularly suitable for collecting oversprayed powder coating material in the powder coating industry.

Axial flow cyclones as used for example in the powder coating industry to collect oversprayed powder are difficult to clean when changing colors of powder coating materials. More particularly, access to the cyclone barrel for cleaning is obstructed by the inlet turning vanes and the clean air outlet tube. Furthermore, it is difficult to clean the turning vanes and outlet tube themselves.

It would be desirable to provide a convenient means by which at least some of the parts of a cyclone recovery system may be cleaned of residual powder coating materials.

In accordance with the invention, a cyclone recovery system for oversprayed particulate coating materials comprises:
a cyclone barrel having an inlet opening and an exit passage through which particulate matter may pass-for collection,
a turning vane assembly having an aperture therethrough, the turning vane assembly, in an operative position, being situated across the inlet opening, and
an outlet pipe, in an operative position, extending through the aperture of the turning vane assembly and into the cyclone barrel, wherein at least part of the turning vane assembly and/or the outlet pipe is/are moveable from said respective operative positions for facilitating cleaning of at least part of the cyclone recovery system.

Preferably, the turning vane assembly is detachably mounted to the inlet opening.

Preferably, the turning vane assembly comprises two or more sub-sections which may be individually removed from the inlet opening with the outlet pipe in place, or removed.

Preferably, the outlet pipe is detachably mounted with respect to the cyclone barrel.

There is further disclosed herein a method of cleaning the above disclosed cyclone recovery system, the method comprising:
moving at least part of the turning vane assembly and/or the outlet pipe from its respective operative position, and
cleaning out the cyclone barrel of particulate material and allowing the particulate material to pass through the exit passage.

Preferably, said movement of said turning vane assembly and/or said outlet pipe is achieved by detachment of same from the cyclone barrel or a housing associated with the cyclone barrel.

There is further disclosed herein an oversprayed powder collection system for a powder coating booth having:
an oversprayed powder collection chamber connected to the booth and to the inlet to a cyclone barrel;
a removable turning vane assembly installed at the inlet to the cyclone barrel around a clean air outlet tube extending from the interior of the cyclone barrel through the inlet to the cyclone barrel; and
a clean air chamber connected to a fan and to the outlet tube.

Preferably, the turning vane assembly comprises two or more turning vane assemblies.

Preferably, the outlet tube is removable.

A preferred form of the present invention will now be described by way of example with reference to the accompanying drawings, wherein:
Fig. 1 is a schematic cross-sectional elevational view of a cyclone recovery system,
Fig. 2 is a schematic cross-sectional elevational view of the cyclone recovery system showing how the clean air outlet pipe may be removed,
Fig. 3 is a schematic plan view taken at 3-3 of Fig. 2, and
Fig. 4 is a schematic perspective view of a turning vane assembly.

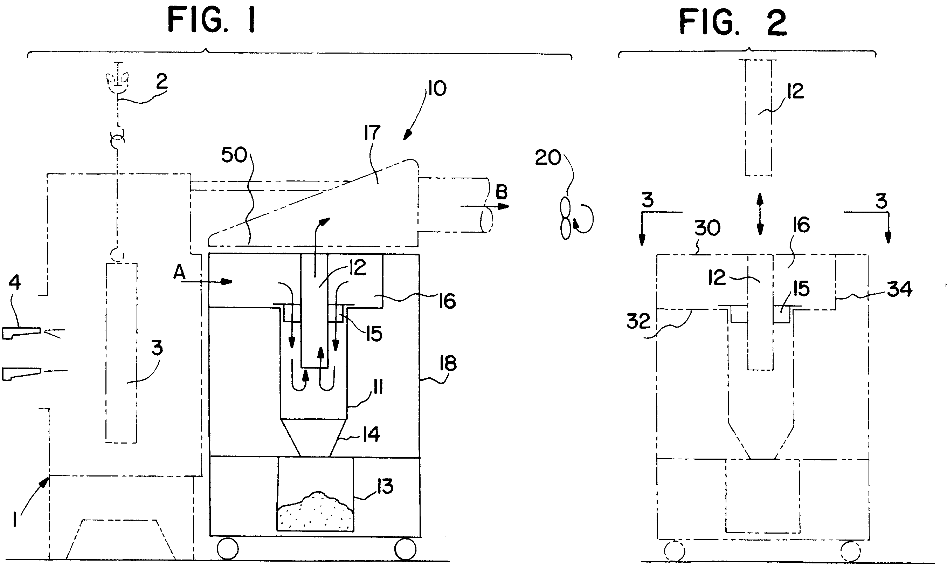

In Fig. 1 of the accompanying drawings there is schematically depicted a cyclone recovery system 10. Recovery system 10 is connected to a powder coating booth 1. An overhead conveyor 2 transports articles 3 through booth 1. One or more powder coating guns 4 spray powder coating material onto article 3. Recovery system 10 includes a housing 18, typically fabricated in sheet steel. Above housing 18 is a clean air chamber 17. Housing 18 includes an oversprayed powder collection chamber 16 which receives oversprayed airborne powder from powder coating booth 1 as indicated by arrow A. Overspray powder collection chamber 16 is formed between top wall 30 of housing 18 and a lower interior wall 32. Chamber 16 terminates at an end wall 34 and has side walls 42,44 which are spaced apart wider than the diameter of turning vane assembly 15 which is later described. In an installation where a multitude of outlet pipes 12 and associated cyclones are housed within a single housing, the chamber 16 would be continuous throughout the width and breadth of housing 18. That is, interior walls 34, 42 and 44 would not be necessary. That is, the powder collection chamber 16, extending the full width and breadth of chamber 18 would serve a number of turning vane assemblies 15, each surrounding discrete outlet pipes 12.

A cyclone barrel 11 is situated within housing 18 and has an opening at its upper end through which air entrained powder may be received from oversprayed powder collection chamber 16. Chamber 16 is open to booth 1 so that oversprayed powder coating material from booth 1 can enter chamber 16. At the lower end of the cyclone barrel 11, there is provided a funnel 14 leading to a powder collection hopper 13.

A clean air outlet pipe 12 extends through a hole 38 formed in the top wall 30 of housing 18. A flange 40 extends radially outwardly from the top edge of pipe 12 to engage the top wall 30 of housing 18 when pipe 12 is inserted through hole 38. Pipe 12 extends through collection chamber 16 and into the cyclone barrel 11.

Situated about clean air outlet pipe 12 is an inlet turning vane assembly 15. Turning vane assembly 15 is mounted onto the top edge of cyclone 11 and is situated between the collection chamber 16 and the interior of cyclone barrel 11.

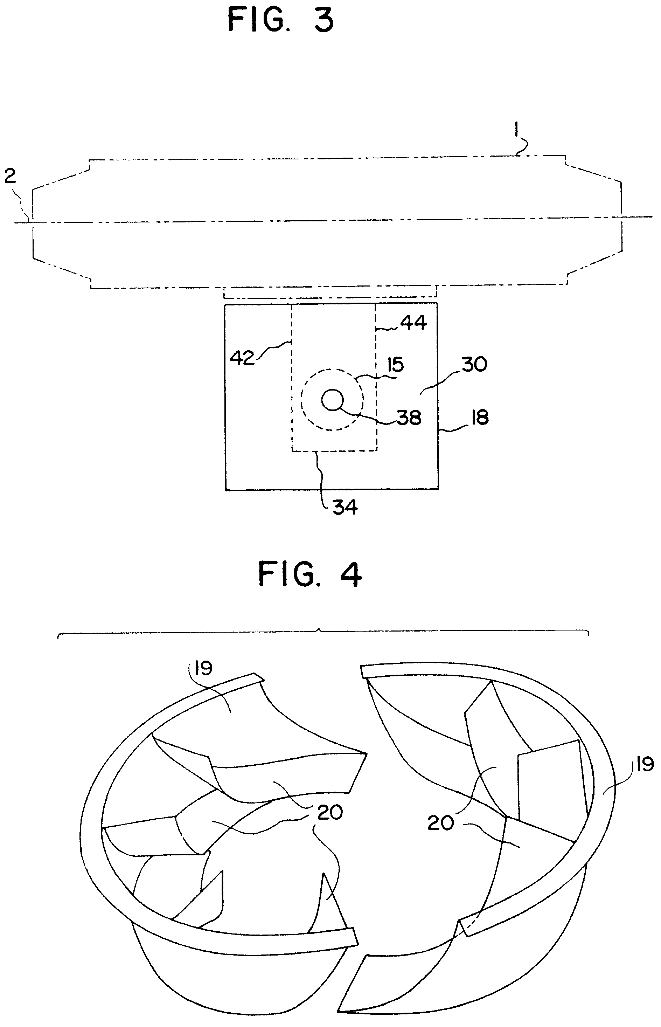

The inlet turning vane assembly 15 is more clearly depicted in Fig. 4. The assembly 15 might be a unitary structure adapted to completely surround the clean air outlet pipe 12. However, and as depicted, the inlet turning vane assembly 15 is preferably comprised of two or more sub-assemblies 19. In any case, the turning vane assembly comprises a plurality of vanes 20 adapted to cause a spiral of air entrained powder flowing downwardly into the cyclone barrel.

In operation of the cyclone recovery system 10, a fan 20 draws relatively clean air in the direction indicated by arrow B from the clean air chamber 17. The relatively clean air may then undergo further filtration. In turn, since an opening in the bottom 50 of chamber 17 communicates with clean air outlet pipe 12, air is drawn upwardly through clean air outlet pipe 12 from the interior of cyclone barrel 11. This suction force in turn pulls powder laden air from chamber 16 through turning vanes 15 into cyclone barrel 11, and pulls oversprayed powder coating material from booth 1 into chamber 16.

Powder laden air from a powder spray booth thus enters the chamber 16 in the direction indicated by arrows A. The suction created in cyclone barrel 11 resulting from the flow of air through clean air outlet pipe 12 draws the air downwardly through the inlet turning vane assembly 15 thus causing a cyclone or spiral of air entrained powder within the cyclone barrel 11. The airborne powder, dust or other particulate matter is accelerated by centrifugal force to the walls of cyclone barrel 11 and falls under gravity via funnel 14 to the powder collection hopper 13. Powder collected from this hopper may periodically be collected and reused. The hopper 13 is typically sealed to the funnel 14.

When cleaning of the cyclone recovery system 10 is required, and with the unit operating (i.e. the fan is drawing air through clean air chamber 17), a high pressure air jet may be directed to all surfaces in the chamber 16. The resultant turbulence will cause any powder which has collected in chamber 16 to become airborne so that it can be drawn into the cyclone barrel 11 via the inlet turning vane assembly 15. Most of this powder will pass through funnel 14 to the collection hopper 13. When the internal surfaces of the settling chamber 16 are thus clean, the air jet may be directed to all accessible surfaces of the inlet turning vane assembly 15 so that all powder adhering to the turning vanes can become air borne and drawn into cyclone barrel 11. At this stage, the exhaust fan causing the air flow B may be turned off. Housing 18 may now be wheeled out from under chamber 17, and the clean air outlet pipe 12 may now be extracted in a vertical direction from the housing 18. Any form of seal may be provided between housing 18 and chamber 17. For example a spring loaded expandible rubber skirt affixed to the underside of chamber 17 may be retracted away from housing 18 prior to the housing being wheeled out. Alternatively, if chamber 17 is not independently supported, chamber 17 might first be removed and then bolts or clips about the flange at the upper end of the pipe 12 may be removed to allow the pipe to be vertically withdrawn. The clean air outlet pipe 12 may now be dusted off and the powder collected using any convenient means such as a vacuum cleaner. Alternatively the surfaces may be cleaned with a blow-off gun, brush, or sponge. As an optional step, the inlet turning vane assembly 15 may also be removed, and dusted off by any of the above means. With outlet pipe 11 and preferably vane assembly 15 removed the internal surfaces of the cyclone barrel 11 may now be easily dusted off by any of the above means and the system then reassembled.

It should be appreciated that sufficient access may be gained to the cyclone barrel 11 without the necessity of removing the turning vane assembly 15. That is, depending on the size of the aperture therethrough through which the clean air outlet pipe 12 extends, removal of the turning vane assembly might not be required.

As a further alternative to the above described cleaning process, and particularly where the turning vane assembly comprises a number of sub-assemblies, the sub-assemblies may be removed prior to the removal of the clean air outlet pipe 12.

Furthermore, where for example the clean air outlet pipe 12 is fixed to the housing 18, or whether it be removable, it may in any case remain in position. That is, sufficient access to the internal surfaces of the cyclone barrel 11 may be attainable simply by the removal of the sub-assemblies of the inlet turning vane assembly 15. Once the turning vanes are removed they can be cleaned by any of the means such as, but not limited to those described earlier, for example by vacuum cleaner, blow-off gun, brush, sponge or the like. Depending on the particular set-up, such cleaning might take place, either with the chamber 17 lifted off, or with the housing 18 wheeled away from beneath the chamber 17.

It should further be appreciated that although a single cyclone barrel 11 is shown in the drawings, the housing 18 might comprise a multitude of cyclone barrels, each provided with the various components of the invention described herein.

Modifications and alterations obvious to those skilled in the art are not to be considered as beyond the scope of the present invention. For example, a filtration element might be included at any point at or downstream of the inlet to the clean air outlet pipe 12.

A further advantage of the removable nature of the turning vane assembly and/or the outlet pipe is that the overall performance of the cyclone recovery system may be readily adjusted by replacing those parts with others having different flow inducing/restricting characteristics. For example, a turning vane assembly having fewer or more vanes, or vanes of shallower or deeper inclination may easily be installed. Also, the outlet pipe may be replaced by one of smaller or larger diameter for example.

## Claims

1. A cyclone recovery system for oversprayed particulate coating materials comprising:
a cyclone barrel having an inlet opening and an exit passage through which particulate matter may pass for collection,
a turning vane assembly having an aperture therethrough, the turning vane assembly, in an operative position, being situated across the inlet opening, and
an outlet pipe, in an operative position, extending through the aperture of the turning vane assembly and into the cyclone barrel, wherein at least part of the turning vane assembly and/or the outlet pipe is/are moveable from said respective operative positions for facilitating cleaning of at least part of the cyclone recovery system.

2. The cyclone recovery system of claim 1 wherein the turning vane assembly is detachably mounted to the inlet opening.

3. The cyclone recovery system of claim 1 or claim 2 wherein the turning vane assembly comprises two or more sub-sections which may be individually removed from the inlet opening with the outlet pipe in place, or removed.

4. The cyclone recovery system of any one of the preceding claims wherein the outlet pipe is detachably mounted with respect to the cyclone barrel.

5. A method of cleaning the cyclone recovery system of any one of the preceding claims, the method comprising:
moving at least part of the turning vane assembly and/or the outlet pipe from its respective operative position, and
cleaning out the cyclone barrel of particulate material and allowing the particulate material to pass through the exit passage.

6. The method of claim 5 wherein said movement of said turning vane assembly and/or said outlet pipe is achieved by detachment of same from the cyclone barrel or a housing associated with the cyclone barrel.

7. An oversprayed powder collection system for a powder coating booth having:
an oversprayed powder collection chamber connected to the booth and to the inlet to a cyclone barrel;
a removable turning vane assembly installed at the inlet to the cyclone barrel around a clean air outlet tube extending from the interior of the cyclone barrel through the inlet to the cyclone barrel; and
a clean air chamber connected to a fan and to the outlet tube.

8. The system of claim 7 wherein the turning vane assembly comprises two or more turning vane assemblies.

9. The assembly of claim 7 or claim 8 wherein the outlet tube is removable.
